(19) Europäisches Patentamt
European Patent Office
Office européen des brevets

(11) EP 0 524 597 B1

(12) **FASCICULE DE BREVET EUROPEEN**

(45) Date de publication et mention de la délivrance du brevet:
**19.02.1997 Bulletin 1997/08**

(51) Int Cl.[6]: **H04L 25/30**

(21) Numéro de dépôt: **92112428.5**

(22) Date de dépôt: **21.07.1992**

(54) **Procédé itératif de réduction de l'interférence intersymbole, et dispositif de réception et application correspondants**

Iteratives Verfahren zur Verminderung von Nachbarsymbolstörungen, sowie entsprechende Empfangsvorrichtung und Anwendung

Iterative method for reducing intersymbol interference, and corresponding reception device and application

(84) Etats contractants désignés:
**AT BE CH DE DK ES FR GB GR IT LI LU MC NL PT SE**

(30) Priorité: **22.07.1991 FR 9109232**

(43) Date de publication de la demande:
**27.01.1993 Bulletin 1993/04**

(73) Titulaire: **ALCATEL MOBILE COMMUNICATION FRANCE**
**75008 Paris (FR)**

(72) Inventeurs:
- **Desperben, Lydie**
  **F-92270 Bois Colombes (FR)**
- **Abdesselem, Ouélid**
  **F-75015 Paris (FR)**
- **Kamanou, Pierre-François**
  **F-92700 Colombes (FR)**

(74) Mandataire: **Weinmiller, Jürgen et al**
**Postfach 24**
**82336 Feldafing (DE)**

(56) Documents cités:
**EP-A- 0 293 620**

- **J. G. PROAKIS 'Digital Communications' 1989 , MCGRAW HILL , US**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 524 597 B1

## Description

Le domaine de l'invention est celui de la réception de signaux numériques. Plus précisément, l'invention concerne l'égalisation de tels signaux, notamment pour combattre l'intertérence intersymbole.

Lorsqu'on observe un signal numérique reçu à un instant donné, on constate que ses caractéristiques (amplitude, signe, phase, ...) dépendent de plusieurs symboles d'information qui ont été émis successivement, et non d'un unique symbole. Cette dépendance est due en particulier aux multitrajets qui affectent le signal émis avant d'atteindre le récepteur, et également, par exemple dans le cas de la radiocommunication cellulaire, à la modulation utilisée.

Il s'avère donc difficile de reconnaître indépendamment chaque symbole émis. Pour cela, il est nécessaire de distinguer, à chaque instant de réception, les contributions des différents symboles, afin d'en conserver une seule par égalisation. Les autres contributions constituent l'interférence intersymbole (ou IIS).

L'invention s'applique à la réception de tout type de signaux numériques, et notamment à la réception dans des mobiles. Les problèmes dus à l'interférence intersymbole se posent en efet de façon encore plus cruciale dans les mobiles, du fait que les conditions de réception varient en permanence (position et vitesse du mobile). L'égalisation doit donc être adaptée à ces variations.

Une application particulière de l'invention est l'égalisation de signaux comportant des séquences d'apprentissage, de contenu connu des récepteurs, tels que ceux utilisés par exemple pour la radiocommunication cellulaire numérique GSM (Groupe Spécial Mobile). Le GSM a défini les spécifications du radiotéléphone cellulaire européen, notamment sous la forme de recommandations. Les informations entre stations de base et stations mobiles sont transmises par paquets sur des fréquences porteuses de l'ordre du GHz, à l'aide d'un modulateur GMSK fonctionnant au débit de 271 kbits/s.

Chaque paquet transmis est constitué d'une séquence de symboles connus, appelée séquence d'apprentissage, et d'une séquence de symboles variant suivant l'information émise. La séquence d'apprentissage est placée au centre du paquet, entre une première et une seconde séquences d'information.

On connaît déjà plusieurs procédés d'égalisation adaptative. Ainsi dans le cadre du projet GSM, on peut recourir à un égaliseur récursif dont les coefficients sont déterminés grâce à l'estimation de la réponse impulsionnelle du canal. Cette méthode est peu robuste en présence de faibles rapports signal à bruit, conditions qui surviennent en présence d'évanouissements sélectifs, qui sont fréquents sur la voie radio.

Il est également possible d'utiliser un égaliseur de Viterbi qui opère en deux étapes :

- il estime la séquence de symboles d'information à partir d'un critère de maximum de vraisemblance,
- il soustrait l'interférence intersymbole.

La première étape est relativement coûteuse en temps de traitement : celui-ci est en effet proportionnel à $2^{Nr}$, Nr étant la durée de la réponse impulsionnelle exprimée en nombre de durée symbole.

On pourra se référer à ce sujet au document EP-A-0 293 620.

L'invention a notamment pour objectif de pallier ces différents inconvénients de l'état de la technique.

Plus précisément, un objectif de l'invention est de fournir un procédé et un dispositif d'égalisation pour combattre l'interférence intersymbole qui soient efficaces et performants dans toutes les conditions de réception, et notamment en présence d'évanouissements sélectifs.

Un autre objectif de l'invention est de fournir un tel procédé, dont la mise en oeuvre soit relativement simple et peu coûteuse en temps de traitement, par comparaison aux procédés connus, tel que l'égaliseur de Viterbi

Un objectif particulier de l'invention est ainsi de fournir un tel procédé, réalisant simultanément l'estimation des symboles émis et l'élimination de l'IIS.

Un autre objectif de l'invention est encore de fournir de tels procédé et dispositif, applicables à la réception dans les mobiles, et notamment à la radiocommunication. L'invention a ainsi pour objectif de fournir de tels procédé et dispositif qui soient parfaitement compatibles avec les différentes recommandations du GSM.

Ces objectifs, ainsi que d'autres qui apparaîtront par la suite, sont atteints selon l'invention à l'aide d'un procédé d'égalisation d'un signal numérique, destiné à combattre l'interférence intersymbole, du type consistant à associer à chaque échantillon reçu un symbole estimé, représentatif du symbole émis, ledit procédé comprenant une étape itérative de suppression de l'interférence intersymbole, dans laquelle chaque itération consiste à, pour chaque échantillon d'un jeu d'échantillons reçus dont la valeur n'a pas été déterminée lors d'une itération précédente :

- comparer ledit échantillon avec au moins un seuil de confiance et, si ledit échantillon dépasse l'un desdits seuils :
- associer audit échantillon un symbole estimé dont la valeur dépend dudit seuil dépassé, la valeur dudit échantillon étant alors déterminée ;
- supprimer l'intertérence intersymbole provoquée par ledit symbole estimé sur les autres échantillons appartenant audit jeu d'échantillons reçus.

De cette façon, on fixe tout d'abord la valeur des symboles correspondant aux échantillons les plus fiables, et on élimine l'intertérence qu'ils provoquent sur les autres échantillons. La valeur des symboles qui leurs correspondent peut alors être plus facilement déterminée, lors des itérations suivantes.

Avantageusement, dans le cas de l'égalsation d'un signal numérique transmis sous forme de paquets de donnéus, chaque paquet comprenant au moins une séquence d'apprentissage, contenant des symboles connus des récepteurs, et au moins une séquence d'information, contenant des symboles utiles, le procédé de l'invention comprend une étape préliminaire de suppression de l'interférence intersymbole provoquée par chacun desdits symboles connus dudit paquet, sur un jeu d'échantillons correspondant à des symboles utiles dudit paquet, ladite étape itérative prenant en compte l'ensemble desdits symboles utiles dudit paquet.

Les symboles connus permettent en effet d'éliminer de façon sûre, sans erreur d'estimation, lors d'une première passe, une première partie de l'interférence intersymbole.

Ces paquets peuvent par exemple comprendre deux séquences d'information séparées par une séquence d'apprentissage, tel que cela est décrit dans le projet GSM.

De façon préférentielle, le procédé comprend une étape de numérisation du signal reçu délivrant des échantillons reçus, une étape d'estimation de la réponse impulsionnelle du canal de transmission délivrant un jeu de coefficients d'autocorrélation $C_i$, et une étape de filtrage adapté desdits échantillons reçus délivrant des échantillons filtrés, lesdites étapes de suppression de l'interférence intersymbole consistant alors, pour un symbole donné, à soustraire de chaque échantillon dudit jeu d'échantillons reçus le produit dudit symbole donné par le coefficient d'autocorrélation $C_i$, i étant représentatif du nombre d'échantillons compris entre ledit échantillon à égaliser et l'échantillon correspondant audit symbole donné.

Dans un mode de réalisation avantageux, lesdits seuils de confiance sont proportionnels au coefficient d'autocorrélation $C_0$.

Il apparait en effet judicieux de modifier la valeur des seuils de confiance en fonction de la réponse du canal.

Préférentiellement, lesdits seuils de confiance sont supérieurs, en valeur absolue, à la somme de tous les coefficients d'autocorrélation $C_i$ autres que $C_0$.

De façon avantageuse, lesdits seuils sont décroissants au fur et à mesure desdites itérations.

En effet, au fur et à mesure des itérations, l'intertérence intersymbole est supprimée. La décision peut donc être prise avec des seuils plus faibles.

Dans le cas où le signal numérique est constitué de symboles pouvant prendre deux valeurs opposées, l'opération de comparaison avec au moins un seuil consiste avantageusement à comparer la valeur absolue desdits échantillons avec un seuil unique, l'opération d'association d'un symbole estimé prenant en compte le signe dudit symbole.

L'invention concerne également tout dispositif d'égalisation mettant en oeuvre le procédé décrit ci-dessus, quel qu'en soit le domaine d'application. Elle s'applique notamment, mais non exclusivement, à l'égalisation dans les systèmes de radiocommunication cellulaire.

D'autres caractéristiques et avantages de l'invention apparaîtront à la lecture de la description suivante d'un mode de réalisation préférentiel de l'invention, donné à titre illustratif et non limitatif, et des dessins annexés, dans lesquels :

- la figure 1 illustre le format des paquets de données, dans le mode de réalisation préférentiel décrit ;
- la figure 2 est un schéma synoptique d'un récepteur selon l'invention ;
- la figure 3 présente un organigramme du procédé d'égatisation de l'invention.

L'invention repose sur l'analyse suivante : si on considère un jeu d'échantillons reçus, on constate que certains d'entre eux sont moins affectés que d'autres par l'interférence intersymbole. La valeur de ces premiers symboles est donc déterminable de façon plus aisée.

Le procédé de l'invention exploite cette caractéristique, en réalisant l'égalisation en au moins deux passes successives :

- suppression de l'IIS due aux symboles dont on a pu fixer la valeur avec un certain degré de confiance ;
- suppression de l'IIS due à au moins certains des autres symboles, dont la valeur peut être déterminée plus facilement que lors de la première passe, une partie de l'IIS ayant déjà été supprimée.

Ce procédé itératif peut bien sûr comprendre plus de deux passes.

Il apparaît clairement que ce procédé peut être appliqué à l'égalisation de tout type de signaux numériques, dès lors qu'on dispose de moyens de suppression de l'IIS due à un symbole estimé.

Le mode de réalisation décrit en détail ci-dessous à titre d'exemple concerne plus précisément la radiocommunication cellulaire selon le projet GSM. Ainsi qu'on l'a mentionné en préambule, ce projet prévoit que les échanges de données se fassent sous forme de paquets.

La figure 1 illustre la structure de ces paquets. Un paquet comprend deux zones 11 et 12 contenant des informations

utiles, séparées par une séquence 13 d'apprentissage.

La séquence 13 d'apprentissage permet notamment de caractériser le canal de transmission et ainsi d'en déduire les valeurs de l'interférence intersymbole. Cette caractérisation suppose que les caractéristiques du canal restent stables sur la durée d'un paquet. Pour soustraire l'interférence intersymbole, il reste alors à identifier les symboles d'information.

Un intervalle de garde est ménagé entre chaque paquet.

La figure 2 présente le schéma synoptique d'un dispositif mettant en oeuvre le procédé de l'invention.

Soit $X_k$ les symboles émis ($X_k$ représente soit les symboles d'apprentissage, soit les symboles utiles), et $x_k$ les échantillons du signal reçu translaté en bande de base et échantillonné. La caractéristique du canal de transmission étant h (t), on a alors :

$$x_k = \sum_{j=0}^{Nr-1} X_{k-j} \times h_j$$

où Nr est la durée de la réponse impulsionnelle exprimée en nombre de durée symbole.

Le signal $x_k$ est dirigé vers un filtre adapté 21, destiné à compenser les perturbations introduites par le canal de transmission. Sa caractéristique est donc h* (-t). Il délivre des échantillons filtrés $V_k$.

Ce filtre 21 est adapté en permanence à l'aide des coefficients $h_j$ de la réponse impulsionnelle du canal, produits par un module 23 d'estimation de la réponse impulsionnelle, à partir des échantillons $x_k$. Ce module 23 délivre également les coefficients d'autocorrélation $C_i$ utilisés pour l'égalisation, ainsi que cela est décrit ci-dessous.

L'ensemble canal de transmission-filtre 21 peut-être représenté de la façon suivante

$$X_k \xrightarrow{C(t)} V_k$$

où : $C(t) = h(t) \times h^*(-t)$ On a donc :

$$V_k = \sum_{i=-N_{r+1}}^{N_{r-1}} X_{k+i} \times C_i$$

$C_i$ étant le coefficient d'autocorrélation :

$$C_i = \sum_j h_j \times h^*_{j+1}$$

$$C_0 = \sum_j |h_j^2|$$

$$C_{-i} = C_i$$

Il apparaît donc que :

$$V_k = X_k \times C_0 + \sum_{i \neq 0} X_{k+i} \times C_i$$

Le but du module 24 d'égalisation est de supprimer le second terme de cette somme, de façon à obtenir l'échantillon égalisé $VE_k = X_k \times C_0$.

$$\sum_{i=0} X_{k+i} \times C_i$$

est appelé par la suite terme interférent.

En d'autres termes, la caractérisation du canal de transmission est obtenue par l'estimation de la réponse impulsionnelle du canal. On effectue un filtrage adapté sur le signal reçu translaté en bande de base et échantillonné. Après ce filtrage, les termes interférents sont égaux aux parties réelles des coefficients d'autocorrélation du signal reçu. Le procédé d'égalisation de l'invention s'applique sur la partie réelle du signal sortant du filtrage adapté.

L'invention propose en effet un procédé nouveau et avantageux permettant de réaliser cette égalisation. La figure 3 présente sous forme d'organigramme simplifié le principe de ce procédé.

Pour chaque paquet de données, la première étape 31 consiste à supprimer l'interférence intersymbole provoquée par chacun des symboles connus $A_k$ de la (ou des) séquence(s) d'apprentissage. Cette étape 31 n'existe bien sûr que dans le cas de signaux, ou de paquets, comprenant une séquence d'apprentissage. (Dans un mode de réalisation particulier, on peut par exemple prévoir que seuls certains paquets comprennent des séquences d'apprentissage, ou encore qu'il y ait des paquets spéciaux d'apprentissage, envoyés régulièrement et/ou à la demande). Elle présente l'intérêt de supprimer une première partie de l'IIS en prenant en compte des valeurs certaines, chaque récepteur connaissant les séquences d'apprentissage.

Chaque échantillon filtré $V_k$ correspondant à un symbole utile du paquet est ensuite considéré. On regarde (32) tout d'abord si une décision a déjà été prise quant à la valeur du symbole correspondant $E_k$, lors d'une itération précédente. Il est clair en effet que l'interférence intersymbole due à un échantillon ne doit être supprimée qu'une seule fois. Bien sûr, cette étape 32 posant la question "décision sur $E_k$ prise ?" n'est pas réalisée, ou est transparente, pour la première itération.

Si cette décision a déjà été prise,on passe directement (33) à l'échantillon suivant. Sinon, une comparaison 34 de la valeur de l'échantillon filtré avec un ou plusieurs seuils de confiance est effectuée.

Si aucune des comparaisons n'est bonne, c'est-à-dire si la valeur de l'échantillon considéré n'est pas suffisamment proche de la valeur de l'un des symboles autorisés, aucun traitement n'est réalisé. On passe (35) à l'échantillon suivant.

Dans le cas contraire, on procède (36) à l'estimation du symbole $E_k$ correspondant à l'échantillon filtré $V_k$ en lui attribuant la valeur du symbole autorisé ayant satisfait à la comparaison. Au sens de l'étape 32, une décision a alors été prise sur $E_k$.

On réalisé ensuite la suppression 37 de l'interférence intersymbole due à cet échantillon, en considérant que c'est le symbole $E_k$ qui a été émis. Cette suppression correspond par exemple, ainsi qu'on l'a précisé plus haut, à soustraire de chaque échantillon considéré le produit $E_k * C_i$. Avantageusement, cette opération n'est réalisée que sur les échantillons pour lesquels une décision n'a pas encore été prise. Il n'est pas nécessaire, en effet, de continuer à supprimer l'IIS des échantillons déjà traités.

L'étape 38 suivante consiste à incrémenter le compteur d'échantillons, pour passer (39) au traitement de l'échantillon suivant $V_{k+1}$. S'il s'agit du dernier échantillon du paquet, on considère l'itération suivante 40.

Si la dernière itération vient d'être réalisée, l'égalisation est terminée. On passe (41) au traitement du paquet de données suivant.

Sinon, les seuils utilisés lors de l'étape 34 sont révisés (42) à la baisse, puis une nouvelle itération est réalisée (43).

Cette étape 42 de révision des seuils n'est pas obligatoire, mais s'avère particulièrement avantageuse. En effet, il est possible de prendre en compte de plus en plus d'échantillons, au fur et à mesure des itérations, l'interférence intersymbole étant à chaque fois réduite.

Dans un mode de réalisation préférentiel, ces seuils sont proportionnels au coefficient d'autocorrélation $C_0$. En effet, il est intéressant de faire varier ces seuils, en fonction des perturbations existant dans le canal de transmission à un instant donné.

Par ailleurs, pour prendre une décision, on admet que les différents seuils S sont tels que :

$$S \geq \sum_{i \neq 0} C_i$$

C'est le cas général.

Dans le cas précis des paquets de la figure 1, le traitement peut se dérouler en deux phases : d'abord on élimine les termes interférents dus aux Na symboles connus qui appartiennent à la séquence d'apprentissage. Ensuite on s'efforce de supprimer les termes interférents dus aux symboles d'information appartenant aux deux séquences d'information qui se situent de part et d'autre de la séquence d'apprentissage.

Cette suppression s'effectue donc par itérations successives. Une itération s'effectue sur tous les échantillons réels qui correspondent aux symboles d'information. Pour chaque échantillon, elle consiste à vérifier d'abord si une décision a été prise sur le symbole correpondant puis, si aucune décision n'a été prise et si la valeur absolue de cet échantillon excède un certain seuil, à décider de la valeur du symbole émis correspondant et à éliminer les termes interférents générés par le symbole détecté.

On présente ci-dessous un algorithme correspondant à ce cas de figure, dans lequel les paramètres pris en compte sont :

| | |
|---|---|
| Na | longueur de la séquence d'apprentissage |
| $A_{m\ (1,Na)}$ : | séquence d'apprentissage à valeurs réelles |
| ipre | rang de l'échantillon correspondant au premier symbole de la séquence d'apprentissage |
| ider : | rang de l'échantillon correspondant au dernier symbole de la séquence d'apprentissage |
| ideb : | rang du premier échantillon de la suite sortant du filtre adapté considéré pour l'égalisation |
| ifin : | rang du dernier échantillon de la suite sortant du filtre adapté considéré pour l'égalisation |
| Nr : | durée de la réponse impulsionnelle exprimée en nombre de durée symbole |
| iter : | nombre d'itérations (deux par exemple) |
| seuil $j_{(1,iter)}$ : | suite des seuils de comparaison |
| Np : | longueur de la suite sortant du filtre adapté |

ENTREES

| | |
|---|---|
| $V_{k\ (k=1,\ Np)}$ : | suite d'échantillons réels filtrés |
| $C_{i(i=0,\ Nr-1)}$ : | coefficients d'autocorrélation |

SORTIES

| | |
|---|---|
| $VE_{k\ (k=\ ideb,\ ifin)}$ : | suite d'échantillons réels égalisés |

Le traitement est donc :

1/ Initialisation des valeurs de la suite $VE_k$ :

$$VE_k = V_k \text{ pour } k = ideb, ifin$$

2/ Suppression des termes interférents générés par les symboles de la séquence d'apprentissage et qui affectent les échantillons correspondant:

**répéter m = 0, Nr-2**

**répéter i = m+1, Nr-1**

$$VE_{ider+i-m} = VE_{ider+i-m} - A_{Na-m} \cdot C_i$$

$$VE_{ipre-i+m} = VE_{ipre-i+m} - A_{m+1} \cdot C_i$$

**fin répéter**

**fin répéter**

3/ Initialisation des indicateurs de décisions $D_k$

$D_k$ =0 pour k = ideb, ipre-1 et pour k = ider+1, ifin

4/ Suppression des termes interférents dus aux symboles d'information

```
répéter 2 fois            (comptage des sections d'information)
    kdeb = ipre - 1       (rang du premier échantillon évalué)
    kfin = ideb           (rang du dernier échantillon évalué)
    inc  = -1
    répéter j=1, iter     ( comptage des itérations)
        barre = C0 * seuilj
        répéter pour k = kdeb, kfin      (comptage des échantillons)
            si Dk = 0 alors
                si (|VEk| - barre) > 0 alors
                    VEk+i = VEk+i - sign(VEk) * Ci  pour i = 1, Nr-1
                    VEk-i = VEk-i - sign(VEk) * Ci  pour i = 1, Nr-1
                    Dk = 1
                fin si
            fin si
            k = k + inc
        fin répéter (traitement échantillon)
    fin répéter (itération d'égalisation)
    kdeb = ider + 1
    kfin = ifin
    inc = - inc
fin répéter       (traitement section d'information)
```

Ainsi qu'on peut le noter, cet algorithme exploite les propriétés des paquets de la figure 1. La suppression des termes interférents se fait à partir de la séquence 13 d'apprentissage, en considérant simultanément les échantillons des séquences 11 et 12 d'information.

Par ailleurs, on remarquera que le seuillage est effectué en une seule opération, en considérant la valeur absolue de l'échantillon. En effet, les symboles ne peuvent prendre que les deux valeurs -1 et +1. Lorsqu'une décision est prise (le seuil est franchi), on ne considère que le signe de l'échantillon, qui est pris comme symbole estimé.

Cet algorithme a été mis en oeuvre sur un processeur de signal ST 18930 pour la démodulation de :

- paquets dits normaux (paquets correspondant, par exemple, au cas d'un canal de trafic "Traffic Channel" ou "TCH" dans les recommandations GSM) avec pour valeurs de paramètres
  Np = 148    Na = 26
  ipre = 62    ider = 87
  ideb = 4    ifin = 145
  Nr = 5    iter = 2
- des paquets dits SCH (paquets correspondant au cas d'un canal de synchronisation ("Synchronisation Channel") pour le GSM) avec pour valeurs de paramètres :
  Np = 148    Na = 64
  ipre = 43    ider = 106

ideb = 4 ifin = 145
Nr = 5 iter = 2

Dans ce mode de réalisation, l'égaliseur de l'invention ne requiert que 55 cycles de calcul, lorsque deux itérations sont effectuées, alors que, pour une implantation équivalente, un égaliseur de Viterbi à 16 états requiert 170 cycles pour le traitement d'un symbole.

Des simulations ont montré que ks performances de l'égaliseur proposé égalent les performances de l'égaliseur de Viterbi pour des rapports signal à bruit inférieurs à 12dB et pour la plupart des profils définis par le GSM et permettent dans tous les cas de satisfaire la norme GSM.

Il est clair que des performances encore meilleures sont obtenues lorsqu'on augmente le nombre d'itérations.

Un des avantages du procédé de l'invention est qu'il permet d'effectuer simultanément l'estimation des symboles émis et l'élimination de l'interférence générée par ces symboles. Son temps de traitement est donc proportionnel à Nr et à iter.

D'autres algorithmes et d'autres mises en oeuvre de l'invention sont bien sûr envisageables. Les adaptations nécessaires aux différents cas de figure pouvant se présenter apparaîtront aisément à l'homme du métier. Il est possible d'adapter l'invention à tous types de signaux numériques, qu'ils soient ou non transmis par paquets, qu'ils comportent ou non des séquences d'apprentissage.

## Revendications

**1.** Procédé d'égalisation d'un signal numérique, destiné à combattre l'interférence intersymbole, du type consistant à associer à chaque échantillon reçu ($x_k$) un symbole estimé ($E_k$), représentatif du symbole émis ($X_k$), caractérisé en ce qu'il comprend une étape (24) itérative de suppression de l'interférence intersymbole, chaque itération consistant à, pour chaque échantillon ($x_k$) d'un jeu d'échantillons reçus dont la valeur n'a pas été déterminée lors d'une itération précédente :

- comparer (34) ledit échantillon avec au moins un seuil de confiance et, si ledit échantillon dépasse l'un desdits seuils :
- associer (36) audit échantillon ($x_k$) un symbole estimé ($E_k$) dont la valeur dépend dudit seuil dépassé, la valeur dudit échantillon ($x_k$) étant alors déterminée;
- supprimer (37) l'interférence intersymbole provoquée par ledit symbole estimé ($E_k$) sur les autres échantillons appartenant audit jeu d'échantillons reçus.

**2.** Procédé selon la revendication 1, caractérisé en ce qu'il est appliqué à un signal numérique transmis sous forme de paquets de données, chaque paquet comprenant au moins une séquence d'apprentissage (13), contenant des symboles ($A_k$) connus des récepteurs, et au moins une séquence d'information (11, 12), contenant des symboles utiles ($X_k$),
et en ce qu'il comprend une étape (31) préliminaire de suppression de l'interférence intersymbole provoquée par chacun desdits symboles connus dudit paquet, sur un jeu d'échantillons correspondant à des symboles utiles dudit paquet, ladite étape itérative prenant en compte l'ensemble desdits symboles utiles dudit paquet.

**3.** Procédé selon l'une quelconque des revendications 1 ou 2, caractérisé en ce qu'il comprend une étape (21) de numérisation du signal reçu, délivrant des échantillons reçus ($x_k$), une étape (23) d'estimation de la réponse impulsionnelle du canal de transmission, délivrant un jeu de coefficients d'autocorrélation $C_i$, et une étape de filtrage adapté desdits échantillons reçus délivrant des échantillons filtrés, et en ce que lesdites étapes (31, 37) de suppression de l'interférence intersymbole consistent, pour un symbole donné, à soustraire de chaque échantillon filtré dudit jeu d'échantillons reçus le produit dudit symbole donné par le coefficient d'autocorrélation $C_i$, i étant représentatif du nombre d'échantillons compris entre ledit échantillon à égaliser et l'échantillon correspondant audit symbole donné.

**4.** Procédé selon la revendication 3 caractérisé en ce que lesdits seuils de confiance sont proportionnels au coefficient d'autocorrélation $C_o$.

**5.** Procédé selon la revendication 4 caractérisé en ce que lesdits seuils de confiance sont supérieurs, en valeur absolue, à la somme de tous les coefficients d'autocorrélation $C_i$ autres que $C_o$.

**6.** Procédé selon l'une quelconque des revendications 1 à 5 caractérisé en ce que lesdits seuils de confiance sont

décroissants au fur et à mesure desdites itérations.

7. Procédé selon la revendication 2, caractérisé en ce que chacun desdits paquets de données comprend deux séquences d'information (11,12) séparées par une séquence d'apprentissage (13).

8. Procédé selon l'une quelconque des revendications 1 à 7, caractérisé en ce qu'il assure l'égalisation d'un signal numérique dont les symboles peuvent prendre deux valeurs opposées,
en ce que l'opération (34) de comparaison avec au moins un seuil consiste à comparer la valeur absolue desdits échantillons avec un seuil unique, et en ce que l'opération (36) d'association d'un symbole estimé prend en compte le signe dudit symbole.

9. Dispositif d'égalisation d'un signal numérique, destiné à combattre l'interférence intersymbole, du type consistant à associer à chaque échantillon reçu ($x_k$) un symbole estimé ($E_k$), représentatif du symbole émis ($X_k$), caractérisé en ce qu'il comprend des moyens pour effectuer une étape itérative de suppression de l'interférence intersymbole, chaque itération consistant à, pour chaque échantillon ($x_k$) d'un jeu d'échantillons reçus dont la valeur n'a pas été déterminée lors d'une itération précédente :

- comparer (34) ledit échantillon avec au moins un seuil de confiance et, si ledit échantillon dépasse l'un desdits seuils :
- associer (36) audit échantillon ($x_k$) un symbole estimé ($E_k$) dont la valeur dépend dudit seuil dépassé, la valeur dudit échantillon ($x_k$) étant alors déterminée;
- supprimer (37) l'interférence intersymbole provoquée par ledit symbole estimé ($E_k$) sur les autres échantillons appartenant audit jeu d'échantillons reçus. 10/ Application du procédé selon l'une quelconque des revendications 1 à 8 à la radiocommunication cellulaire.

**Patentansprüche**

1. Verfahren zur Entzerrung eines digitalen Signals, um die Interferenz zwischen Symbolen zu bekämpfen, wobei jeder empfangenen Tastprobe ($x_k$) ein geschätztes Symbol ($E_k$) zugeordnet wird, das für das ausgesendete Symbol ($X_k$) repräsentativ ist, dadurch gekennzeichnet, daß es einen iterativen Schritt (24) der Unterdrückung der Interferenz zwischen Symbolen enthält und daß jede Iteration für jede Tastprobe ($x_k$) eines Satzes von empfangenen Tastproben, deren Wert noch nicht bei einer vorhergehenden Iteration bestimmt wurde, darin besteht,

- die Tastprobe mit mindestens einer Vertrauensschwelle zu vergleichen (34) und, wenn die Tastprobe eine der Schwellen übersteigt:
- der Tastprobe ($x_k$) ein geschätztes Symbol ($E_k$) zuzuordnen (36), dessen Wert von der überschrittenen Schwelle abhängt, so daß der Wert der Tastprobe ($x_k$) dann bestimmt ist,
- die Interferenz zwischen Symbolen zu unterdrücken (37), die durch das geschätzte Symbol ($E_k$) an den anderen Tastproben hervorgerufen wurde, die zum gleichen empfangenen Satz von Tastproben gehören.

2. Verfahren nach Anspruch 1, dadurch gekennzeichnet, daß es auf ein digitales Signal angewandt wird, das in Form von Datenpaketen übertragen wird, wobei jedes Paket mindestens eine Lernsequenz (13) mit dem Empfänger bekannten Symbolen ($A_k$) und mindestens eine Informationssequenz (11, 12) mit Nutzsymbolen $X_k$ enthält, und daß es einen vorbereitenden Verfahrensschritt (31) der Unterdrückung der durch jedes der bekannten Symbole des Pakets hervorgerufenen Interferenz zwischen Symbolen an einem Satz von den Nutzsymbolen des Pakets entsprechenden Tastproben enthält, wobei der iterative Schritt die Gesamtheit der Nutzsymbole des Pakets berücksichtigt.

3. Verfahren nach einem beliebigen der Ansprüche 1 oder 2, dadurch gekennzeichnet, daß es einen Schritt (21) der Digitalisierung des Empfangssignals enthält, bei dem empfangene Tastproben ($x_k$) geliefert werden, einen Schritt (23) der Schätzung der Impulsantwort des Übertragungskanals, bei dem ein Satz von Autokorrelationskoeffizienten ($C_i$) geliefert wird, und einen Schritt der angepaßten Filterung der empfangenen Tastproben, bei dem gefilterte Tastproben geliefert werden, und daß die Schritte (31, 37) der Unterdrückung der Interferenz zwischen Symbolen für ein gegebenes Symbol darin bestehen, von jeder gefilterten Tastprobe des Satzes von empfangenen Tastproben das Produkt des gegebenen Symbols mit dem Autokorrelationskoeffizienten $C_i$ abzuziehen, wobei i für die Anzahl der Tastproben zwischen der zu entzerrenden Tastprobe und der Tastprobe entsprechend dem gegebenen Symbol repräsentativ ist.

4. Verfahren nach Anspruch 3, dadurch gekennzeichnet, daß die Vertrauensschwellen zum Autokorrelationskoeffizienten $C_0$ proportional sind.

5. Verfahren nach Anspruch 4, dadurch gekennzeichnet, daß die Vertrauensschwellen absolut gesehen größer als die Summe aller Autokorrelationskoeffizienten $C_i$ mit Ausnahme von $C_0$, sind.

6. Verfahren nach einem beliebigen der Ansprüche 1 bis 5, dadurch gekennzeichnet, daß die Vertrauensschwellen im Verlauf der Iterationen abnehmen.

7. Verfahren nach Anspruch 2, dadurch gekennzeichnet, daß jedes Paket von Daten zwei Informationssequenzen (11, 12) enthält, die durch eine Lernsequenz (13) voneinander getrennt sind.

8. Verfahren nach einem beliebigen der Ansprüche 1 bis 7, dadurch gekennzeichnet, daß es die Entzerrung eines digitalen Signals bewirkt, dessen Symbole zwei entgegengesetzte Werte annehmen können, daß der Schritt (34) des Vergleichs mit mindestens einer Schwelle darin besteht, den Absolutwert der Tastproben mit einer einzigen Schwelle zu vergleichen, und daß der Schritt (36) der Zuordnung eines geschätzten Symbols das Vorzeichen des Symbols berücksichtigt.

9. Vorrichtung zur Entzerrung eines digitalen Signals, um die Interferenz zwischen Symbolen zu bekämpfen, wobei jeder empfangenen Tastprobe ($x_k$) ein geschätztes Symbol ($E_k$) zugeordnet wird, das für das ausgesendete Symbol ($X_k$) charakteristisch ist, dadurch gekennzeichnet, daß sie Mittel aufweist, um einen iterativen Verfahrensschritt der Unterdrückung der Interferenz zwischen Symbolen durchzuführen, wobei jede Iteration darin besteht, für jede Tastprobe ($x_k$) eines Satzes von empfangenen Tastproben, deren Wert nicht durch eine frühere Iteration bestimmt wurde,

- die Tastprobe mit mindestens einer Vertrauensschwelle zu vergleichen (34) und, wenn die Tastprobe eine der Schwellen übersteigt,
- der Tastprobe ($x_k$) ein geschätztes Symbol ($E_k$) zuzuordnen, dessen Wert von der überschrittenen Schwelle abhängt, so daß der Wert der Tastprobe ($x_k$) dann bestimmt ist,
- die Interferenz zwischen Symbolen zu unterdrücken (37), die durch das geschätzte Symbol ($E_k$) an den anderen Tastproben hervorgerufen wurde, die zum gleichen empfangenen Satz von Tastproben gehören.

10. Anwendung des Verfahrens nach einem beliebigen der Ansprüche 1 bis 8 auf ein zellenförmiges Funktelefonnetz.

**Claims**

1. Method for equalising a digital signal to combat intersymbol interference of the type in which each sample received ($x_k$) is associated with an estimated symbol ($E_k$) representing the transmitted symbol ($X_k$), characterised in that it comprises an iterative stage (24) of intersymbol interference elimination, each iteration comprising for each sample ($x_k$) of a set of received samples whose value has not been determined during a previous iteration:

- comparing (34) said sample with at least one confidence threshold and if said sample exceeds any of said thresholds:
- associating (36) with said sample ($x_k$) an estimated symbol ($E_k$) whose value depends on said threshold exceeded, the value of said sample ($x_k$) being then determined; and
- eliminating (37) the intersymbol interference caused to other samples belonging to said set of received samples by said estimated symbol ($E_k$).

2. Method according to claim 1 characterised in that it is applied to a digital signal transmitted in the form of data packets, each packet comprising at least one learning sequence (13) containing symbols ($A_k$) known to the receiver and at least one data sequence (11, 12) containing wanted symbols ($X_k$), and in that it comprises a preliminary stage (31) of eliminating intersymbol interference caused to a set of samples representing wanted symbols of said packet by each of said known symbols of said packet, said iterative stage taking into account all of said wanted symbols of said packet.

3. Method according to claim 1 or claim 2 characterised in that it comprises a stage (21) of digitising the received signal to supply received samples ($x_k$), a stage (23) of estimating the impulse response of the transmission channel

to supply a set of autocorrelation coefficients ($C_i$) and a stage of filtering said received samples to supply filtered samples, and in that said intersymbol interference elimination stages (31, 37) comprise, for a given symbol, subtracting from each filtered sample of said set of received samples the product of said given symbol by the autocorrelation coefficient $C_i$ where i is representative of the number of samples between said sample to be equalised and the sample respective to said given symbol.

**4.** Method according to claim 3 characterised in that said confidence thresholds are proportional to the autocorrelation coefficient $C_0$.

**5.** Method according to claim 4 characterised in that said confidence thresholds are greater in absolute value than the sum of all the autocorrelation coefficients $C_i$ other than $C_0$.

**6.** Method according to any one of claims 1 to 5 characterised in that said confidence thresholds decrease as said iterations proceed.

**7.** Method according to claim 2 characterised in that each of said data packets comprises two data sequences (11, 12) separated by a learning sequence (13).

**8.** Method according to any one of claims 1 to 7 characterised in that it equalises a digital signal whose symbols can take either of two opposite values, in that the operation (34) of comparison with at least one threshold compares the absolute value of said samples with a single threshold and in that the operation (36) of associating an estimated symbol takes account of the sign of said symbol.

**9.** Device for equalising a digital signal to combat intersymbol interference of the type in which each sample received ($x_k$) is associated with an estimated symbol ($E_k$) representing the transmitted symbol ($X_k$), characterised in that it comprises means for implementing an iterative stage of intersymbol interference elimination, each iteration comprising for each sample ($x_k$) of a set of received samples whose value has not been determined during a previous iteration:

- comparing (34) said sample with at least one confidence threshold and if said sample exceeds any of said thresholds:
- associating (36) with said sample ($x_k$) an estimated symbol ($E_k$) whose value depends on said threshold exceeded, the value of said sample ($x_k$) being then determined; and
- eliminating (37) the intersymbol interference caused to other samples belonging to said set of received samples by said estimated symbol ($E_k$).

**10.** Application to cellular radio systems of a method according to any one of claims 1 to 8.

FIG.1

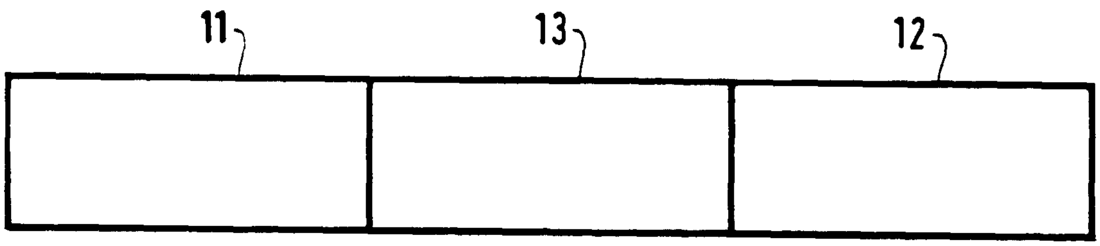


FIG.2

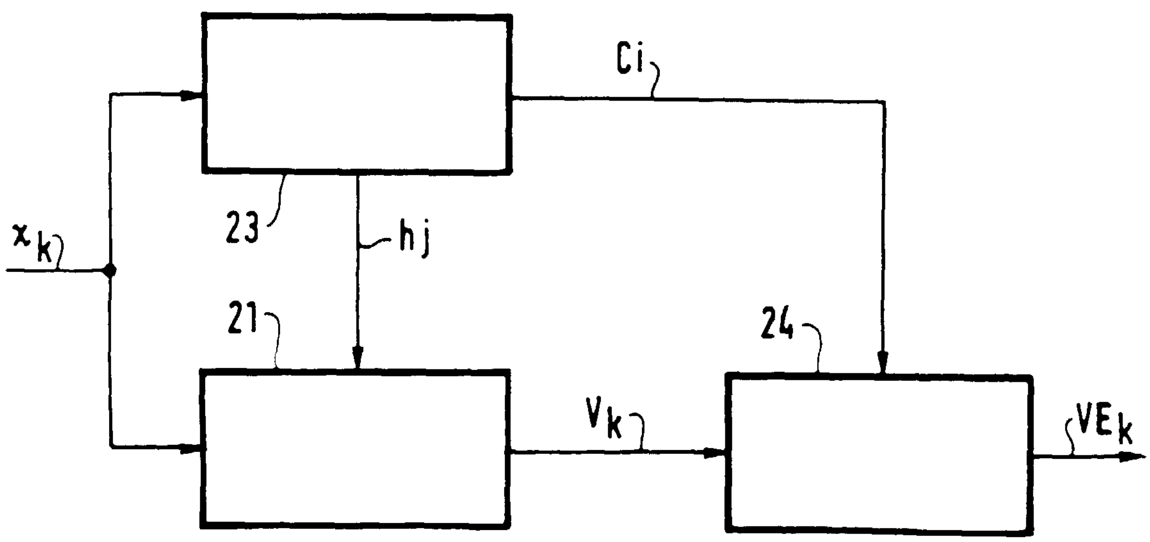

FIG. 3

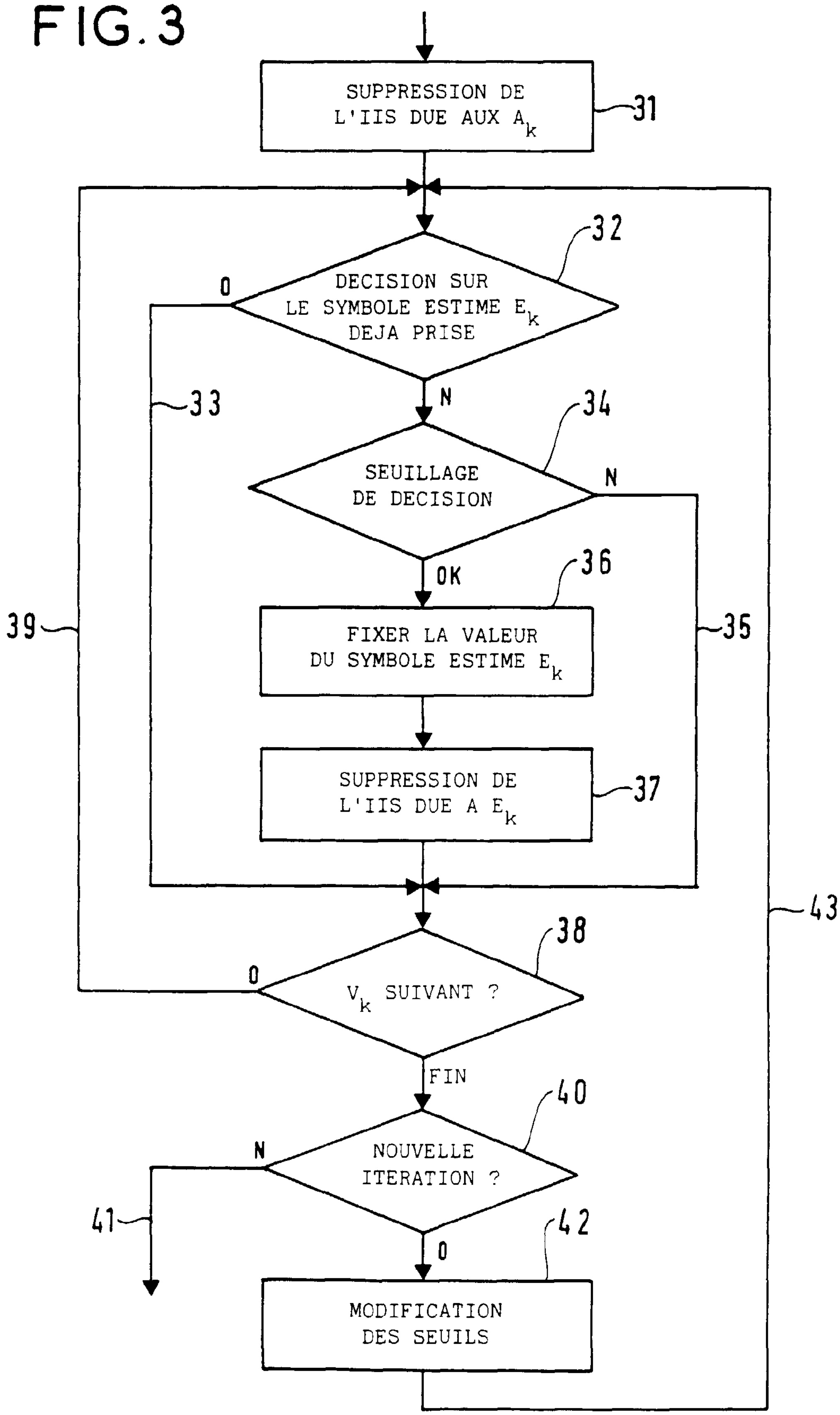
SUPPRESSION DE L'IIS DUE AUX $A_k$
31
DECISION SUR LE SYMBOLE ESTIME $E_k$ DEJA PRISE
32
O
N
33
SEUILLAGE DE DECISION
34
N
OK
FIXER LA VALEUR DU SYMBOLE ESTIME $E_k$
36
35
39
SUPPRESSION DE L'IIS DUE A $E_k$
37
43
$V_k$ SUIVANT ?
38
O
FIN
NOUVELLE ITERATION ?
40
N
41
O
42
MODIFICATION DES SEUILS